# EUROPEAN PATENT APPLICATION

(11) **EP 2 484 991 A1**
(43) Date of publication of application: **08.08.2012**
(21) Application number: 09848425.6
(22) Date of filing: 21.08.2009
(51) Int. Cl.: F24J 2/54, F24J 2/38

(54) **SOLAR TRACKER FOR ORIENTING SOLAR PANELS**

(71) Applicant: Indra Sistemas, S.A., 28108 Alcobendas, Madrid (ES)
(72) Inventor: GONZÁLEZ RODRÍGUEZ, Antonio, E-28108 Madrid (ES); GONZÁLEZ RODRÍGUEZ, Ángel Gaspar, E-28108 Madrid (ES); CAMINERO TORIJA, Miguel Ángel, E-28108 Madrid (ES); CHACÓN MUÑOZ, Jesús Miguel, E-28108 Madrid (ES); GARCÍA MÁRQUEZ, Fausto Pedro, E-28108 Madrid (ES)
(74) Representative: Elzaburu Marquez, Alberto
(86) International application number: PCT/ES2009/070349
(87) International publication number: WO 2011/020931

(57) **Abstract**

Solar tracker (1) for the orientation of solar panels (2), which is supported on a base (3) and comprises a holding structure (4) for the solar panels (2). It comprises an intermediate support element (5) to which the holding structure (4) of the panels (2) is articulated. The two movements of the holding structure (4) of the panels (2) are respectively produced by:
a) a first mechanism that produces a flat movement, with three mobile rigid elements - one central (6) and two lateral (7). The rigid lateral elements (7) can be moved by means of linear actuators (10). The intermediate support element (5) can be on one of the mobile rigid elements (6, 7) or be coincident with it, and
b) a second mechanism that acts on the holding structure (4) and is located on the intermediate support element (5); it comprises means to make the holding structure (4) rotate around an axis integral with the intermediate support element (5).

## Description

### FIELD OF THE INVENTION

This invention refers to a solar tracker of the kind used to keep solar plates or panels perpendicularly oriented towards the solar rays and in this way optimise the collection of solar energy.

### BACKGROUND OF THE INVENTION

The panels for solar energy-based production are mounted on structures oriented towards the sun. These structures can be either stationary or mobile. Stationary structures are simple frames on which the panels are arranged with an orientation that does not vary.

To maximise electric power production, different systems have been developed to orient the panel so that the radiation strikes perpendicularly to the panel. Two degrees of freedom would be required to target the sun at any hour and on any day of the year. These degrees of freedom usually correspond to the angle of elevation of the sun and the azimuth angle. The elevation is usually achieved by rotating the panel with respect to a horizontal axis, which is usually done with a hydraulic cylinder. The platform is usually placed at the azimuth angle by another rotation around another axis, which is usually vertical, and to actuate the system more than one cylinder is usually used because rotations greater than 180° must be provided for this degree of freedom.

There are various proposals for mobile solar trackers. At present, there are devices with a fixed vertical pole that are commonly used, in which the azimuth rotation around a vertical axis is achieved with a crown gear and pinion, or else with a crown gear and worm.

For example, Spanish utility model 1064540 ("Solar tracker") is composed of two tubes axially connected to each other in a vertical arrangement, where the lower tube is stationary and longer and the upper tube is mounted for rotation and is equipped at its lower end with a crown gear that engages with a pinion driven by a gear reducer motor located on a support secured to the lateral surface of the lower stationary tube. Actuation of this gear reducer motor determines an azimuth rotation of the solar tracker.

Spanish utility model 1063689 ("Dual axis solar tracker") comprises a stationary pole on which a concentric pivoting pole is provided, exterior to it, to form the rotation system. There is a plate on the stationary pole that supports a worm-crown gear assembly that acts on the pivoting pole, and this assembly is driven by a direct current motor to make the azimuth movement. An elevation rod is responsible for the solar inclination movement by means of a pinion connection provided on a steel spindle also driven by a direct current motor.

Spanish patent 2282034 for "Solar panel orienting support" describes a V-structure supported by the vertex in a rotating assembly with respect to a vertical axis, while a rack intended for use as a solar collection surface is incorporated, by means of horizontal articulations, on the ends of the branches of this structure. The rack is able to assume an orientation perpendicular to the sun's angle of incidence by a combination of movements with respect to the vertical axis and on the horizontal articulations.

Spanish utility model 1064946, referring to a "Solar tracker", has a configuration intended to solve the problems that the different loads to which this tracker is subjected cause in its articulations and mechanisms, which are subjected to overloads because of the action of such loads. For this purpose, it presents a general structure with a cylindrical vertical support tower with an upper bearing for the azimuth rotation, three arms mounted on this bearing, ribs, support beams and a pre-stressed rod or cable that joins the ends of the three arms, such that, when the tracker structure is subjected exclusively to its own weight and the weight of the panels, the pre-stressing of that rod or cable produces a load state in which the oblique or inclined arms work practically under pure compression.

These configurations that need a stationary vertical pole, and in which the azimuth rotation around a vertical axis is achieved by various sorts of mechanisms, require constant maintenance and a laborious mounting process, and on many occasions that are also sensitive to oscillations.

Therefore, some simpler proposals have been made that depart from the previous solutions.

For example, Spanish utility model 1070000 ("Piston actuated solar tracker for the orientation of solar energy collectors") describes a mechanism with two pistons as actuators thereof and a support point that can be a ball-and-socket joint or a cardan joint, all of this mounted on a structural pillar. The platform on which the energy collectors are installed has its support on a point located in its centre of gravity, which enables the platform to oscillate with three degrees of freedom, and two equidistant articulated fasteners to which the pistons are secured. The action of the two pistons on the articulated points and the oscillation enabled by the third articulated point is what orients the plane of the platform in a straight angle with the sun.

Spanish patent 2302469 for "Bi-directional solar tracker" describes a device of the kind formed by a support structure with a platform holding solar plates, and both its azimuth orientation and elevation orientation are varied to track the sun. This tracking is done with two actuators each connected respectively to a fixed point on the ground and a vertex of the platform, enabling the latter to rotate around a central support point thereof. The distances between the points that join the actuators have a one-to-one relation with the two angles of rotation of the platform around each of the perpendicular axes.

Therefore, there is an apparent need to have a simpler solar tracker that is easy to maintain and mount and that reliably performs the function of orienting the panels so that the solar radiation strikes perpendicularly to them.

### SUMMARY OF THE INVENTION

Thus, the object of this invention is to provide a solar tracker for the orientation of solar panels that is simpler and easier to maintain and mount, and that has an alternative configuration to those already available.

The invention proposes a solar tracker for the orientation of solar panels that is supported on a base and comprises a structure holding the solar panels at the top, which is able to follow the sun both in elevation and azimuth so that the surfaces of the solar panels are permanently oriented perpendicularly to the solar rays, which comprises an intermediate support element to which the structure holding the panels is articulated, and where the two movements of the panel holding structure are respectively produced by:
a) a first mechanism that produces a flat movement and that comprises three mobile rigid elements - one central and two lateral - with the two rigid lateral elements hinged to the base at one end and to the rigid central element at the other end, such that the distance between the respective ends of the rigid lateral elements is constant at the base as well as at their connection to the rigid central element during movement of the mechanism, in such a way that the rigid lateral elements can be moved by the action of at least one linear actuator that acts on at least one of these rigid lateral elements, with the intermediate support element being on one of the mobile rigid elements or coincident with it, and
b) a second mechanism that acts on the holding structure, with the second mechanism located on the intermediate support element and comprising means to make the holding structure rotate around an axis that moves jointly with the intermediate support element.

This configuration greatly reduces the mounting time of the tracker assembly and prevents the oscillations that deflect the orientation of the panels with respect to the perpendicular direction of the solar rays.

Another advantage of the invention tracker is that its component parts are simple and easy to replace, which facilitates the management of procurement and spare part logistics.

Other features and advantages of this invention will be deduced from the following detailed description of an illustrative embodiment of its object in relation to the accompanying figures.

### BRIEF DESCRIPTION OF THE DRAWINGS

The object of this invention will be illustrated hereinafter on a non-limiting basis, making reference to the accompanying drawings in which:
Figure 1 shows a view in perspective of a solar tracker of the invention with solar plates attached, in an initial position.
Figure 2 shows a front view of a solar tracker of the invention with solar plates attached.
Figure 3 shows a view in perspective of a solar tracker of the invention with solar plates attached, in a final position.
Figure 4 shows a diagram of the first tracker mechanism with the solar plate panel on one of the mobile rigid elements of this mechanism.
Figure 5 shows a diagram of the first tracker mechanism with the solar plate panel on another of the mobile rigid elements of this mechanism.
Figure 6 shows a diagram of the first tracker mechanism of figure 4 with the actuator elements operating in one position.
Figure 7 shows a diagram of the first tracker mechanism of figure 4 with the actuator elements operating in an alternative position.
Figure 8 shows a diagram of an alternative embodiment of a solar tracker of the invention.

### DETAILED DESCRIPTION OF THE INVENTION

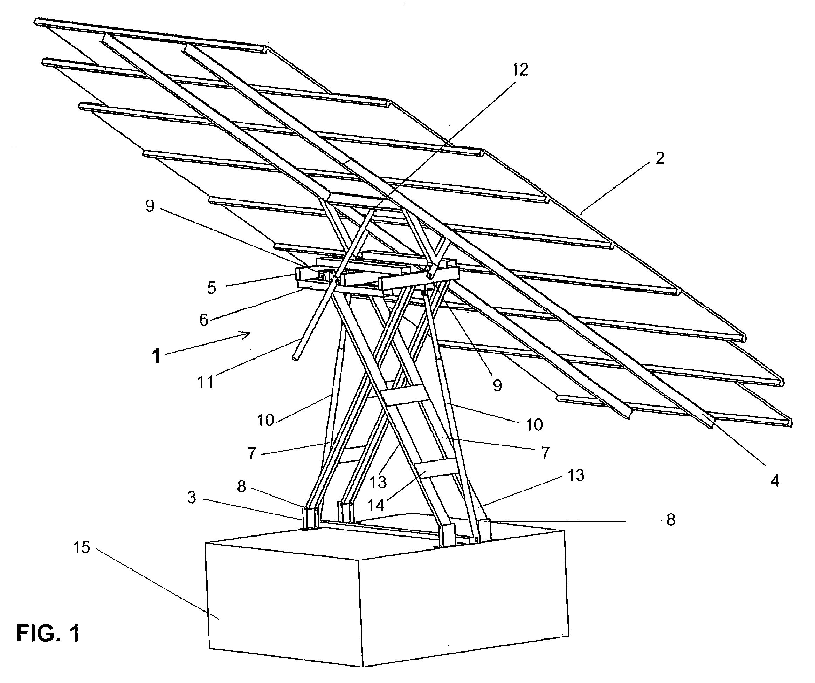

Figure 1 shows a view in perspective of a solar tracker 1 of the invention with solar plates 2 attached, in an initial position. The solar tracker 1 is supported on a base 3 (in this case with a support platform 15), and its upper part comprises a holding structure 4 for the solar panels 2, which supports them. Figure 1 also shows that there is an intermediate support element 5 underneath the holding structure 4, to which the latter is articulated.

The holding structure 4 (and, therefore, the solar panels 2) are able to follow the sun in both elevation and azimuth, so that the surfaces of the solar panels 2 are permanently oriented perpendicularly to the solar rays. For this purpose, the solar tracker 1 is provided with two mechanisms:
a) a first mechanism that produces a flat movement and that comprises three mobile rigid elements - one central 6 and two lateral 7 - with the two rigid lateral elements 7 hinged to the base 3 at one end 8 and to the rigid central element 6 at the other end 9. During movement of the mechanism, the distance between the lower ends (8-8) of the rigid lateral elements 7 is constant at the base 3, and the distance between the upper ends (9-9) of the rigid lateral elements 7 is constant at their connection to the rigid central element 6. The rigid lateral elements 7 can be moved by the action of at least one linear actuator 10 that acts on at least one of these rigid lateral elements 7. In the embodiment of figure 1, there are two linear actuators 10, each of them acting on the respective rigid lateral element 7. In this figure 1, the intermediate support element 5 is located on the mobile rigid central element 6. In other embodiments, the intermediate support element 5 can be found on one of the mobile rigid lateral elements 7. It is also possible for the intermediate support element 5 to coincide with the mobile rigid central element 6 or lateral element 7.
b) a second mechanism that acts on the holding structure 4, with the second mechanism located on the intermediate support element 5 and comprising means to make the holding structure rotate around an axis that moves jointly with the intermediate support element 5. In the case of figure 1, the means that the second mechanism comprises consist of a linear actuator 11, one of whose ends 12 is located on the holding structure 4 such that, on acting on this structure 4, its rotation around the axis integral with the intermediate support element 5 occurs.

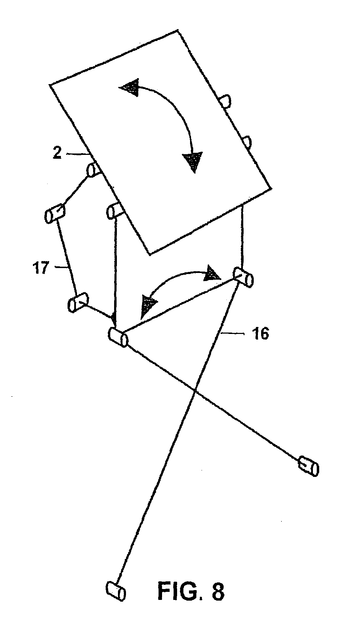

Another option for this second mechanism (schematically shown in figure 8) is that the means that the second mechanism comprises consist of a mechanism 17 that comprises the same elements as the first mechanism 16, and the base of which is the intermediate support element 5.

The intermediate support element 5 can be located on the rigid central element 6 of the first mechanism, as shown in figure 1. According to another embodiment, both elements 5, 6 can be coincident.

Moreover, in other embodiments the intermediate support element 5 can be located on one of the rigid lateral elements 7 of the first mechanism and, according to another embodiment, both elements 5, 7 can be coincident.

In the embodiment with two mechanisms 16, 17 of the same kind, in the second mechanism 17 the holding structure 4 can be located on the mobile rigid central element 6 of the second mechanism 17. It could also be coincident with this mobile rigid central element 6.

Moreover, according to another embodiment of the configuration with two mechanisms 16, 17 of the same kind, in the second mechanism 17 the holding structure 4 can be located on one of the rigid lateral elements 7 of the second mechanism 17, or it can be coincident with it.

Figures 1, 2, 3 and 6 show that the linear actuators 10 act on the points of connection of the rigid lateral elements 7 to the rigid central element 6.

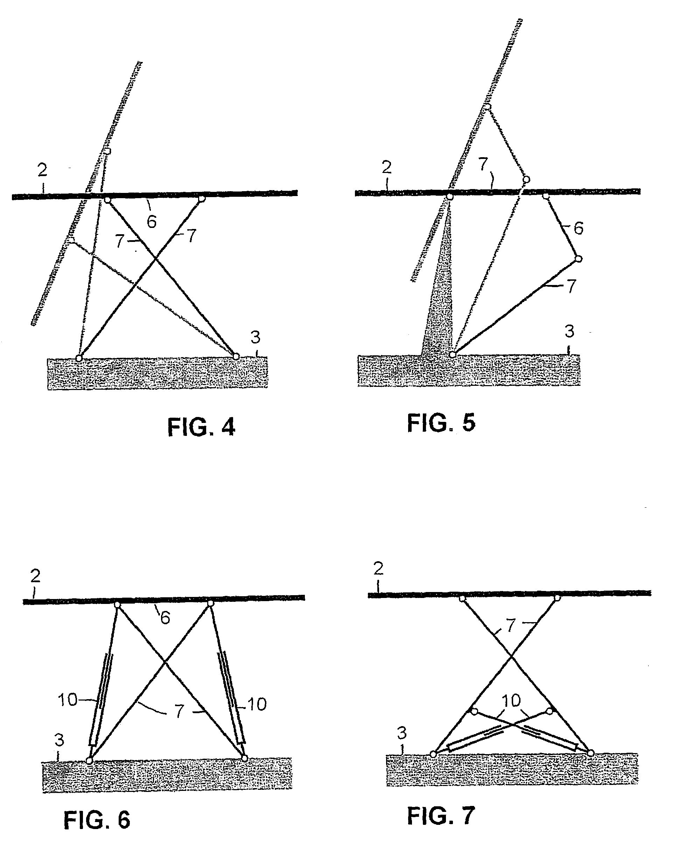

Another option (shown in figure 7) is that the linear actuators 10 act on intermediate points of the rigid lateral elements 7.

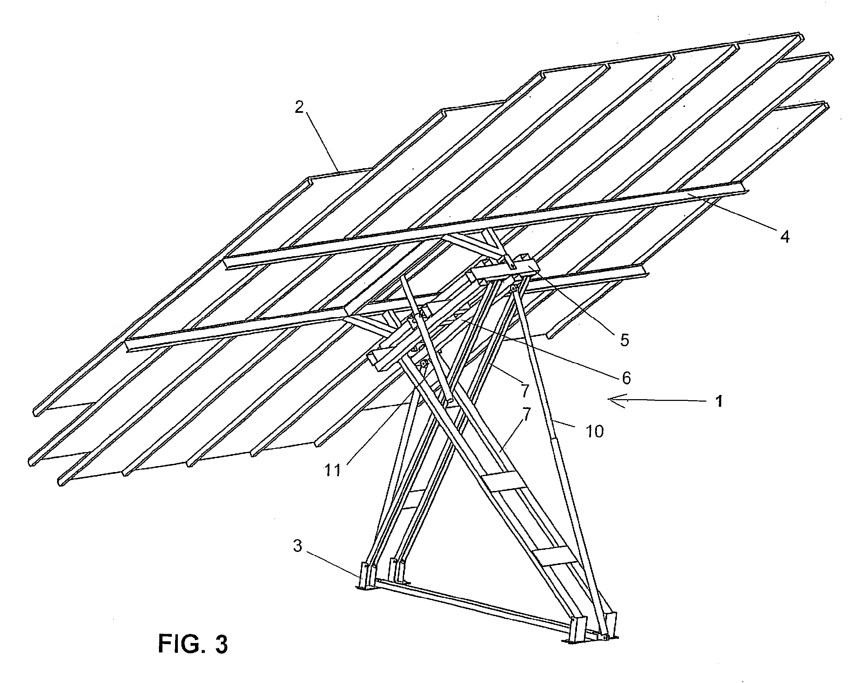

As seen in figures 1 and 3, each of the rigid lateral elements 7 can comprise at least one rod 13 (in the embodiment of the figures, each rigid lateral element 7 comprises two parallel rods 13 joined by crosspieces 14).

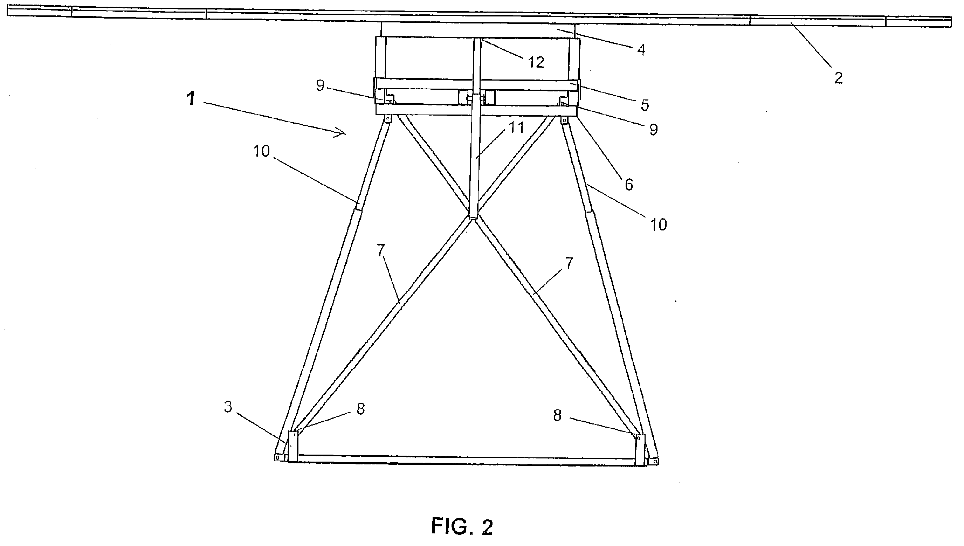

In these figures (e.g., figure 2), it is seen that the rigid lateral elements 7 of the embodiment shown have the same length. Moreover, the axis that moves jointly with the intermediate support element 5 can be parallel to the longitudinal axis of this intermediate support element 5 (see figures 1 to 3).

In figure 4, the solar panel would coincide with the mobile rigid central element or connector (thicker line, labelled as 6), and the lateral elements (labelled as 7) join it to the base platform (labelled as 3). The system is shown in two positions: with the panel horizontal, drawn in a dark tone, and with the panel inclined, in a clearer tone. Another option would be to install the panels on one of the lateral elements of the mechanism, as shown in figure 5. In this figure 5, the panel is labelled as 2, the other lateral element is labelled as 7, the base is labelled as 3 and the connector, which in this case does not receive the panels, is labelled as 6.

With the diagrams of figures 4 and 5, there are various elements (e.g., rods) that join the panel 2 and the base 3, making the system more rigid. As a result, with the same amount of steel, the system is more rigid, or else less steel is needed to assure the structural stability of the system, having established a certain level of rigidity.

To move the panel 2, linear actuators 10 would be used to move the elements 7 anchored to the base 3. If the rigidity requirements are very strict, the cylinders should act on the anchor points of the lateral elements 7 with the connector 6, as shown in figure 6. In this figure 6, the linear actuators are labelled as 10. This makes the elements 7 (e.g., rods) work under axial stress, whereby the system rigidity is increased. If the rigidity requirements are not as strict, the actuation can be on other points of the lateral elements 7 to reduce the range of the linear actuators 10, as shown in figure 7. For both cases, depending on the range of angles that the tracker 1 should cover, one or two cylinders can be used.

The linear actuators or motors 10 are primarily formed by two rods with relative movement between them; this movement can be hydraulically or electromechanically generated. If the movement is generated with a fluid, we would have a conventional hydraulic cylinder. If the movement is electromechanically generated, we would be referring to a conventional linear actuator with a worm screw driven by an electric motor.

The advantage of using this mechanism as opposed to the fixed axis is that the geometry of the mechanism can be optimised to be adapted to the requirements of the tracker 1. These requirements may include: maximisation of the ranges of angles that the panel 2 can rotate, maximisation of the structure's rigidity against the wind load and weight, minimisation of the stresses in the elements 7, etc.

The diagram of figure 4 would correspond to a system with a single degree of freedom. It is usually used in photovoltaic panels and is commonly used in heat generation systems based on concentration of the radiation. With this method, the solar panels are replaced by mirrors that concentrate the light on a pipe.

The same scheme can be repeated to execute trackers 1 of two degrees of freedom, to thus be able to follow the sun both in elevation and azimuth. As seen hereinabove, in this way the connector 6 of the first mechanism 16 would serve as a base for the second mechanism 17. A mixed scheme can also be used, where a first mechanism is used for one degree of freedom and, for the other degree of freedom, a conventional axis driven by one or more linear actuators 10 (e.g., hydraulic cylinders) is used. Figure 8 shows the system with two degrees of freedom with two mechanisms 16, 17 for the two inclinations. This figure shows the lower mechanism 16, the upper mechanism 17 and the solar panel 2.

The preferential embodiments of the invention that we have described hereinabove can include the modifications comprised within the scope defined by the following claims.

## Claims

1. Solar tracker (1) for the orientation of solar panels (2), which is supported on a base (3) and comprises a holding structure (4) of the solar panels (2) at the top, and which is able to follow the sun both in elevation and in azimuth so that the surfaces of the solar panels (2) are permanently oriented perpendicularly to the solar rays, **characterised in that** it comprises an intermediate support element (5) to which the holding structure (4) of the panels (2) is articulated, and **in that** the two movements of the holding structure (4) of the panels (2) are respectively produced by
a) a first mechanism that produces a flat movement and that comprises three mobile rigid elements - one central (6) and two lateral (7) - with the two rigid lateral elements (7) hinged to the base (3) at one end (8) and to the rigid central element (6) at the other end (9), such that the distance between the respective ends (8-8, 9-9) of the rigid lateral elements (7) is constant at the base (3) as well as at their connection to the rigid central element (6) during movement of the mechanism, in such a way that the rigid lateral elements (7) can be moved by the action of at least one linear actuator (10) that acts on at least one of these rigid lateral elements (7), with the intermediate support element (5) being on one of the mobile rigid elements (6, 7) or coincident with it, and
b) a second mechanism that acts on the holding structure (4), with the second mechanism located on the intermediate support element (5) and comprising means to make the holding structure (4) rotate around an axis that moves jointly with the intermediate support element (5).

2. Solar tracker (1) for the orientation of solar panels (2), as per claim 1, **characterised in that** the means that the second mechanism comprises consist of a linear actuator (11), one of whose ends (12) is located on the holding structure (4) such that, on acting on this structure (4), its rotation around the axis integral with the intermediate support element (5) occurs.

3. Solar tracker (1) for the orientation of solar panels (2), as per claim 1, **characterised in that** the means that the second mechanism comprises consist of a mechanism that comprises the same elements as the first mechanism, and the base of which is the intermediate support element (5).

4. Solar tracker (1) for the orientation of solar panels (2), as per any of the preceding claims, **characterised in that** the intermediate support element (5) is located on the mobile rigid central element (6) of the first mechanism or is coincident with it.

5. Solar tracker (1) for the orientation of solar panels (2), as per any of the claims 1 to 3, **characterised in that** the intermediate support element (5) is located on one of the rigid lateral elements (7) of the first mechanism or is coincident with it.

6. Solar tracker (1) for the orientation of solar panels (2), as per any of the claims 4 or 5 when they depend on 3, **characterised in that** in the second mechanism, the holding structure (4) is located on the mobile rigid central element of the second mechanism or is coincident with that mobile rigid central element.

7. Solar tracker (1) for the orientation of solar panels (2), as per any of the claims 4 or 5 when they depend on 3, **characterised in that** in the second mechanism, the holding structure (4) is located on one of the rigid lateral elements (7) of the second mechanism or is coincident with it.

8. Solar tracker (1) for the orientation of solar panels (2), as per any of the preceding claims, **characterised in that** the linear actuators (10) act on the points of connection of the rigid lateral elements (7) to the rigid central element (6).

9. Solar tracker (1) for the orientation of solar panels (2), as per any of the claims 1 to 7, **characterised in that** the linear actuators (10) act on intermediate points of the rigid lateral elements (7).

10. Solar tracker (1) for the orientation of solar panels (2), as per any of the preceding claims, **characterised in that** the linear actuators (10, 11) are hydraulic cylinders.

11. Solar tracker (1) for the orientation of solar panels (2), as per any of the claims 1 to 9, **characterised in that** the linear actuators (10, 11) are electromechanical means which comprise a worm screw driven by an electric motor.

12. Solar tracker (1) for the orientation of solar panels (2), as per any of the preceding claims, **characterised in that** each of the rigid lateral elements (7) comprises at least one rod (13).

13. Solar tracker (1) for the orientation of solar panels (2), as per claim 12, **characterised in that** each of the rigid lateral elements (7) comprises two parallel rods (13) joined by crosspieces (14).

14. Solar tracker (1) for the orientation of solar panels (2), as per any of the preceding claims, **characterised in that** the rigid lateral elements (7) are the same length.

15. Solar tracker (1) for the orientation of solar panels (2), as per any of the preceding claims, **characterised in that** the axis that moves jointly with the intermediate support element (5) is parallel to the longitudinal axis of this intermediate support element (5).

16. Solar tracker (1) for the orientation of solar panels (2), as per any of the preceding claims, **characterised in that** the base to which the rigid lateral elements of the first mechanism are hinged consists of a support platform (15).
